# EUROPÄISCHE PATENTSCHRIFT

(11) **EP 1 899 588 B1**
(45) Veröffentlichungstag und Bekanntmachung des Hinweises auf die Patenterteilung: **18.11.2009**
(21) Anmeldenummer: 06707559.8
(22) Anmeldetag: 14.03.2006
(51) Int. Cl.: F01N 7/18, F01N 3/28, B01D 53/88, F01N 3/021

(54) **VERFAHREN ZUM HERSTELLEN VON ABGASFÜHRENDEN VORRICHTUNGEN, INSBESONDERE ABGASREINIGUNGSVORRICHTUNGEN**
METHOD FOR PRODUCING EXHAUST-GAS-CONDUCTING DEVICES, IN PARTICULAR EXHAUST-GAS-CLEANING DEVICES
PROCEDE POUR REALISER DES DISPOSITIFS D'ACHEMINEMENT DES GAZ D'ECHAPPEMENT, EN PARTICULIER DES DISPOSITIFS DE PURIFICATION DES GAZ D'ECHAPPEMENT

(30) Priorität: 23.06.2005 DE 102005029163
(43) Veröffentlichungstag der Anmeldung: 19.03.2008
(73) Patentinhaber: EMCON Technologies Germany (Augsburg) GmbH, 86154 Augsburg (DE)
(72) Erfinder: KRONER, Peter, 66482 Zweibrücken (DE); SCHMIDT, Stefan, 86462 Langweid am Lech (DE); MERSCHKOETTER, Stefan, 86152 Augsburg (DE)
(74) Vertreter: Prinz & Partner
(86) Internationale Anmeldenummer: PCT/EP2006/002332
(87) Internationale Veröffentlichungsnummer: WO 2006/136214

(56) Entgegenhaltungen:
- EP-A- 0 681 095
- EP-A- 0 982 480
- EP-A- 1 445 443
- WO-A-99/32215
- WO-A-03/033886
- DE-A1- 10 247 582
- DE-A1- 10 313 155
- DE-C1- 4 433 974
- PATENT ABSTRACTS OF JAPAN Bd. 2003, Nr. 01, 14. Januar 2003 (2003-01-14) & JP 2002 263764 A (SANKEI GIKEN KOGYO CO LTD), 17. September 2002 (2002-09-17)

## Beschreibung

Die Erfindung betrifft ein Verfahren zum Herstellen von abgasführenden Vorrichtungen, insbesondere Abgasreinigungsvorrichtungen, die jeweils ein Außengehäuse mit einem darin geklemmten Einleger haben, wobei der Einleger ein abgasdurchströmtes Substrat und ein das Substrat umgebendes elastisches Ausgleichselement umfaßt.

Die abgasführenden Vorrichtungen, um die es sich bei der Erfindung handelt, sind insbesondere Abgasreinigungsvorrichtungen wie Katalysatoren und Dieselpartikelfilter oder Kombinationen aus beiden. In solchen Vorrichtungen sind gegen radialen Druck sehr empfindliche Einleger untergebracht, bei denen es sich bislang überwiegend um axial durchströmte Keramiksubstrate handelt, die mit einem elastischen Ausgleichselement (üblicherweise als Lagermatte bezeichnet) umwickelt sind: Diese Einleger werden hauptsächlich durch radiale Klemmung im Außengehäuse in axialer und seitlicher Richtung gehalten, wobei eine zusätzliche axiale Abstützung, z.B. mit einem Drahtgestrickring, möglich ist. Die Klemmung muß groß genug sein, damit im Fahrbetrieb durch den Gasdruck wie auch durch Vibrationen keine Verschiebung des Einlegers relativ zum Außengehäuse in axialer Richtung zustande kommt. Auf der anderen Seite darf der radiale oder, allgemeiner, seitlich einwärts wirkende Druck nicht so groß sein, daß es zum Zerstören des Einlegers kommt, insbesondere zum Zerstören des auf Druck empfindlichen Katalysatorsubstrats bzw. Dieselpartikelfiltersubstrats.

Das Einbringen und Klemmen des Einlegers im Außengehäuse erfolgt bislang beispielsweise durch sogenanntes Wickeln. Hierbei wird zunächst ein Blechmantel durch Walzenbiegen oder Dornbiegen vorgeformt. Anschließend wird der aus Substrat und Lagermatte bestehende Einleger seitlich in den vorgeformten Blechmantel eingeschoben, der Blechmantel kraftgesteuert fest um den Einleger gewickelt und schließlich der Mantel geschlossen, indem er verschweißt wird. Dabei wird die Matte komprimiert.

Da jedoch die Abmessungen des Substrats (wie auch die Lagermatte) gewissen Herstellungstoleranzen unterliegen, ist durch dieses bekannte Verfahren eine optimale Klemmung des Einlegers im Außengehäuse nicht immer gewährleistet. Während ein Substrat mit besonders kleinem Durchmesser unter Umständen nicht genügend stark geklemmt wird, kann es bei einem besonders großen Substrat aufgrund des höheren durch die komprimierte Matte ausgeübten Drucks zur Zerstörung des Substrats kommen.

Hinzu kommt, daß die Lagermatte, die zwischen dem Substrat und dem Außengehäuse angeordnet ist und für einen Druckausgleich und stetige Vorspannung sorgen soll, nach dem Zusammendrücken einem gewissen Setzungsvorgang unterworfen ist (Relaxieren), wodurch der über sie an das Substrat weitergegebene Druck abnimmt. Das Zurückfedern des Außengehäuses nach dem Einbringen und Klemmen führt ebenfalls dazu, daß der anfänglich aufgebrachte Druck auf das Substrat und damit die aufgebrachte Klemmkraft nachläßt. Weiterhin nimmt der Haltedruck der Lagermatte im Betrieb ab (z.B. durch Alterung).

Eine (theoretische) Möglichkeit, bei der Klemmung des Einlegers dessen Maßtoleranzen zu kompensieren, besteht nun darin, das Außengehäuse beim bisher beschriebenen Verfahren druck- bzw. kraftgesteuert zu schließen. Jedoch lassen sich in der Praxis auch dadurch kaum die auftretenden großen Schwankungen im Haltedruck der Lagermatte ausgleichen.

Die JP 2002-263764 A beschreibt ein Verfahren zur Herstellung einer abgasführenden Vorrichtung, bei dem der Außendurchmesser des Substrats und das Gewicht der Lagermatte bestimmt werden. Aus den ermittelten Daten wird der zur Erzielung einer einheitlichen Haltekraft nötige Durchmesser des Außengehäuses bestimmt, und das Außengehäuse wird entsprechend angepaßt.

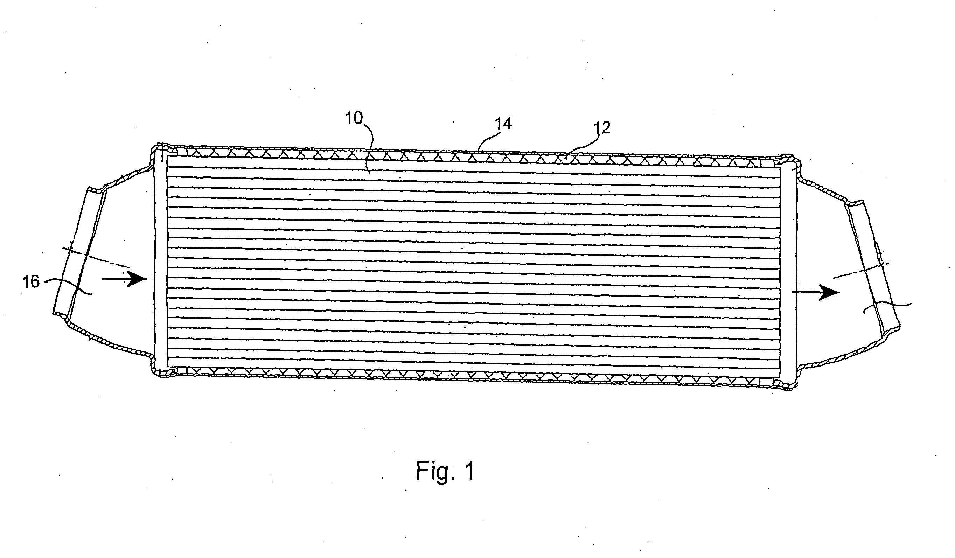

Die EP 1 445 443 A1 zeigt ein Verfahren zur Montage eines Katalysators bzw. Filterkörpers, bei dem in der Ausführungsform der Figuren 1 bis 7 erst das Gehäuse fertig hergestellt und dann die Packung aus Substrat und Lagerungsmatte in das Gehäuse hineingestopft wird. Bei der Ausführungsform gemäß Figur 8 wird die Baugruppe aus Substrat und Lagerungsmatte in ein noch nicht geschlossenes Gehäuse eingesetzt. Dann wird das Gehäuse auf den berechneten Durchmesser geschlossen, also weggesteuert geschlossen.

Die DE 103 13 155A1 zeigt ein Verfahren zur Montage eines Substrates einer Abgasanlage, bei dem ein Blechzuschnitt für das Gehäuse mit geeigneten Abmessungen hergestellt wird, so dass die miteinander zu verbindenden Ränder des Gehäuses überlappungsfrei auf Stoß aneinander anliegen.

Aufgabe der Erfindung ist es, ein Verfahren vorzustellen, das für eine ausreichend sichere Klemmung des Einlegers im Außengehäuse bei minimalen Ausschußraten sorgt.
Dies wird durch folgende Verfahrensschritte erreicht:
a) Bestimmen der individuellen Außengeometrie des Substrats,
b) Ermitteln einer auf die individuelle Außengeometrie des Substrats abgestimmten Geometrie des Außengehäuses zur Erzielung einer erforderlichen, individuell auf den Einleger abgestimmten und auszuübenden Klemmkraft,
c) Herstellen des Außengehäuses mit abgestimmter Geometrie, und
d) Montieren und Klemmen des Einlegers im Außengehäuse.

Bei den bislang bekannten Verfahren wurde stets ein einheitliches, rundgebogenes Außengehäuse verwendet, das kraft- oder druckgesteuert um den Einleger geschlossen wurde. Beim druckgesteuerten Schließen wurden Toleranzen in der Größe des Einlegers teilweise dadurch ausgeglichen, daß das Außengehäuse etwas weiter geschlossen wurde. Die Erfindung geht einen anderen Weg, indem sie die Außengeometrie jedes einzelnen Substrats vor dem Verbauen ermittelt und dann, abhängig von dieser Außengeometrie, ein Außengehäuse formt, das exakt auf die Außengeometrie des jeweiligen Substrats (inklusive Raum für die Lagermatte) abgestimmt ist. Anschließend wird der Einleger, bestehend aus Substrat und Ausgleichselement, in seinem individuell angefertigten Außengehäuse montiert und geklemmt. Auf diese Weise ist die Flächendichte der komprimierten Matte und damit der durch sie ausgeübte Haltedruck deutlich geringeren Schwankungen unterworfen, als dies im Stand der Technik der Fall ist, was bedeutet, daß jeder Einleger mit der für ihn notwendigen Haltekraft geklemmt wird. Durch das erfindungsgemäße Verfahren läßt sich somit die Substratbelastung reduzieren, und es wird eine bessere Dauerhaltbarkeit erreicht. Mit abgestimmter Geometrie des Außengehäuses ist in diesem Zusammenhang gemeint, daß Form und Abmaße des Außengehäuses maßgeschneidert werden. Erfindungsgemäß ist vorgesehen, daß die Geometrie des Außengehäuses unmittelbar aus der Außengeometrie des Substrats bestimmt wird. Zwischenschritte wie beispielsweise eine Gewichtsbestimmung oder -berechnung des Substrats sind hierzu nicht vorgesehen.

Zur Verbesserung der Genauigkeit bei der Ermittlung der Geometrie des Außengehäuses wird vorzugsweise zusätzlich zum Bestimmen der Außengeometrie des Substrats das individuelle Gewicht des Ausgleichselements bestimmt. Dies ist sinnvoll, da der durch das Ausgleichselement auszuübende Druck unter anderem von der Masse des Einlegers und somit auch von der Masse des Ausgleichselements abhängt.

Um auch kleinste Strukturen des Substrats nachbilden zu können, wird die abgestimmte Geometrie des Außengehäuses vorteilhaft durch inkrementales Umformen erzeugt. Dies ist vor allem bei unrunden oder eckigen Substratquerschnitten von Bedeutung.

Wie bereits erwähnt, ist es möglich, daß das Außengehäuse geschlossen wird, um den Einleger zu klemmen. Vorteilhaft werden dann vor dem Schließen des Gehäuses geeignete Parameter für den Schließprozeß ermittelt. Dadurch läßt sich die Substratbelastung besonders niedrig halten.

Das Schließen des Gehäuses kann druckgesteuert oder weggesteuert erfolgen. Auch eine Kombination aus beiden Verfahren ist möglich. Ein weggesteuertes Schließverfahren ist besonders vorteilhaft, da die Geometrie des Substrats und damit auch die "Zielgeometrie" des Außengehäuses bereits bekannt ist.

Da durch den individuellen Formprozeß das Außengehäuse nahezu jeder Substratform angepaßt werden kann, ist das erfindungsgemäße Verfahren besonders vorteilhaft bei einem Substrat anwendbar, das im wesentlichen zylindrisch mit einer von der Kreisform abweichenden Grundfläche ist. Es kommen also insbesondere unrunde Konturen, beispielsweise ovale oder sogenannte triovale Querschnitte (trioval = im wesentlichen dreieckige Form mit abgerundeten Ecken) in Betracht. Durch das erfindungsgemäße Verfahren ist eine definiert inhomogene bzw. gezielte Flächenpressung möglich, die insbesondere bei solchen nicht runden Konturen zu weniger Ausschuß und einer besseren Dauerhaltbarkeit führt. So läßt sich bei einem im Querschnitt ovalen Substrat in den Bereichen mit größerem Radius ein höherer Haltedruck erreichen, als dies bei einem vorgefertigten runden oder vorgerundeten Außengehäuse der Fall wäre, das lediglich um ein ovales Substrat gewickelt wird. Zugleich werden lokale Druckspitzen in den Bereichen mit kleinerem Radius vermieden, die beim herkömmlichen Verfahren aufgrund der Rückfederung entstehen. Auf diese Weise ergibt sich eine geringere Substratbelastung.

Eine besonders einfache Möglichkeit zur Bestimmung der individuellen Außengeometrie besteht darin, daß das Substrat vermessen wird.

Gemäß einer bevorzugten Ausführungsform werden zum Einleger ermittelte Daten in eine Steuerung eingespeist, und in der Steuerung wird die individuelle Geometrie des zugeordneten Außengehäuses ermittelt. Sämtliche Daten werden vorzugsweise vollautomatisch durch Kopplung mit den Meßeinrichtungen in die Steuerung eingespeist. Die Steuerung ermittelt dann die maßgeschneiderte Geometrie. Gleichzeitig kann die Steuerung mit dem Werkzeug bzw. den Werkzeugen gekoppelt sein, welche das Außengehäuse auf die gewünschte Geometrie bringen.

Die Vorrichtung, die durch das erfindungsgemäße Verfahren hergestellt wird, ist gemäß der bevorzugten Ausführungsform ein Abgaskatalysator, ein Dieselpartikelfilter oder eine Kombination aus beiden. Als Kern des Einlegers ist jeweils ein druckempfindliches Substrat vorgesehen.

Insbesondere ist das Gehäuse als Blechgehäuse ausgeführt.

Das erfindungsgemäße Verfahren kann, neben dem bereits genannten Wickeln, auf sämtliche Verfahren zum Herstellen abgasführender Vorrichtungen und sämtliche Verfahren, die ein Blechgehäuse zugrundelegen, angewandt werden. Neben dem Wickeln ist auch das sogenannte Kalibrieren möglich. Hierbei wird von außen am Umfang eines vorgefertigten geschlossenen Rohres gegen dieses gedrückt, um es plastisch zu deformieren und gegen den Einleger zu pressen.

Ein drittes Verfahren sieht ein Gehäuse aus mehreren Schalen vor, die gegen den Einleger gepreßt und anschließen aneinander befestigt werden.

Eine vierte Ausführungsform sieht ein sogenannten Stopfverfahren vor. Hierbei wird ein geschlossenes zylindrisches Gehäuse gefertigt, dessen Innengeometrie bereits auf die Außengeometrie des Einlegers abgestimmt ist. Anschließend wird stirnseitig der Einleger in das Gehäuse eingeschoben.

Weitere Merkmale und Vorteile der Erfindung ergeben sich aus der nachfolgenden Beschreibung anhand der beigefügten Zeichnung. In dieser zeigt:
- Figur 1 eine Längsschnittansicht durch eine durch die Erfindung hergestellte Vorrichtung in Form einer Abgasreinigungsvorrichtung;
- Figur 2 schematische Ansichten von beim erfindungsgemäßen Verfahren verwendeten Meßvorrichtungen und Werkzeugen;
- Figur 3 eine stirnseitige Ansicht einer durch das erfindungsgemäße Verfahren hergestellten Vorrichtung mit gewickeltem Außengehäuse;
- Figur 4 eine perspektivische Ansicht eines beim erfindungsgemäßen Verfahren eingesetzten Kalibrierwerkzeugs, teilweise im Schnitt; und
- Figur 5 eine stirnseitige Ansicht einer durch das erfindungsgemäße Verfahren hergestellten Vorrichtung mit einem aus Schalen hergestellten Außengehäuse.

In Figur 1 ist eine in einem Kraftfahrzeug untergebrachte abgasführende Vorrichtung in Form einer Fahrzeugabgasreinigungsvorrichtung dargestellt. Die Fahrzeugabgasreinigungsvorrichtung ist entweder ein Abgaskatalysator oder ein Dieselpartikelfilter oder eine Kombination aus beiden.

Kernstück der Abgasreinigungsvorrichtung ist ein langgestrecktes, zylindrisches Substrat 10, das beispielsweise aus einem keramischen Substrat oder einer Art gewickelter Wellpappe oder einem anderen katalytischen Träger- oder Filtermaterial mit oder ohne Beschichtung besteht. Das Substrat 10 kann einen kreiszylindrischen Querschnitt oder einen unrunden Querschnitt aufweisen. Nur zur vereinfachten Darstellung ist in den Figuren ein kreiszylindrischer Querschnitt dargestellt. Das Substrat ist von einer Lagermatte 12 umgeben, die als elastisches Ausgleichselement zwischen dem Substrat 10 und einem Außengehäuse 14 wirkt. Das Außengehäuse 14 ist sehr dünnwandig ausgeführt und insbesondere aus Blech. Stromaufwärts und stromabwärts sind mit dem Außengehäuse 14 ein Einströmtrichter 16 bzw. ein Ausströmtrichter 18 verbunden.

Das Substrat 10 bildet zusammen mit der Lagermatte 12 den sogenannten Einleger.

Im Betrieb strömt Abgas über den Einströmtrichter 16 stirnseitig in das Substrat 10 ein und verläßt mit weniger Schadstoffen versehen schließlich das Substrat 10 an der gegenüberliegenden Stirnseite, um über den Ausströmtrichter 18 die Reinigungsvorrichtung zu verlassen.

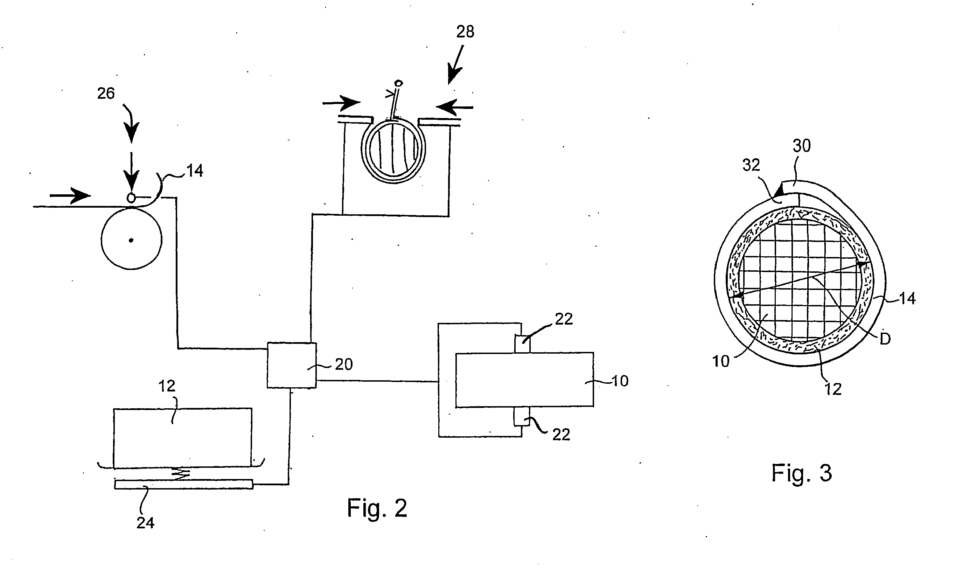

Die Herstellung der Reinigungsvorrichtung wird im folgenden anhand der Figuren 2 und 3 erläutert. In Figur 2 sind verschiedene Meßstationen dargestellt, mit denen Eigenschaften jedes einzelnen zu verbauenden Einlegers (d.h. des Substrats 10 und der Lagermatte 12) im Hinblick auf ein individuell abgestimmtes . Außengehäuse zur Erzielung einer optimierten Klemmkraft des Einlegers im Gehäuse 14 ermittelt werden.

Die Meßstationen sind über eine Steuerung 20 mit Werkzeugen zur Herstellung des Außengehäuses 14 bzw. zum Montieren und Klemmen des Einlegers im Außengehäuse 14 gekoppelt. Die im folgenden erläuterten Stationen werden in der bevorzugten Reihenfolge des Herstellungsverfahrens beschrieben.

In einer ersten Meßvorrichtung wird die Außengeometrie (Form und Außenabmessungen, insbesondere Umfang) des Substrats 10 mittels vorzugsweise berührungsloser Meßsensoren 22 ermittelt. Die Meßsensoren 22 sind mit der Steuerung 20 verbunden, in der die erhaltenen Meßwerte für das Substrat 10 abgelegt werden.

Anschließend wird das Gewicht der Lagermatte 12 auf einer Waage 24 bestimmt, die ebenfalls mit der Steuerung 20 gekoppelt ist. Auch hier werden die erhaltenen Daten in der Steuerung 20 abgelegt.

Mit den ermittelten Daten über den zu verbauenden Einleger (bestehend aus Substrat 10 und Lagermatte 12) wird in der Steuerung 20 eine auf zumindest die individuelle Außengeometrie des Substrats 10 abgestimmte Geometrie des Außengehäuses (vorzugsweise unter Berücksichtigung eines Setzungsfaktors und der Nachgiebigkeit der Lagermatte 12) ermittelt, was durch Rechnen oder durch Vergleichen mit einer in der Steuerung 20 abgelegten Zuordnungsmatrix erfolgen kann. Die individuelle Geometrie wird auf die Erzielung der erforderlichen, individuell auf den Einleger abgestimmten und auszuübenden Klemmkraft ausgelegt.

Neben den genannten könnten natürlich noch weitere Daten des individuellen Einlegers bei der Berechnung der Gehäuse-Außengeometrie berücksichtigt werden, so zum Beispiel das Gewicht des Substrats 10.

In einem nächsten Schritt wird dieses ermittelte Außengehäuse 14 mit abgestimmter Geometrie durch inkrementales Umformen hergestellt (siehe Position 26). Dies kann beispielsweise durch Dorn- oder Walzenbiegen erfolgen, jedoch muß die Biegewalze dabei sehr klein dimensioniert sein, um die nötigen kleinen Umformungen herstellen zu können.

Zuletzt wird der aus Substrat 10 und Lagermatte 12 vorgefertigte Einleger mit seinem maßgeschneiderten Außengehäuse 14 im sogenannten Wickelverfahren verbaut (siehe Position 28). Dazu wird das vorgefertigte Außengehäuse 14 leicht gespreizt und der Einleger seitlich in das Außengehäuse 14 eingeschoben. Das Außengehäuse 14 wird druck- und/oder weggesteuert geschlossen, indem die sich überlappenden Ränder 30, 32 so weit übereinandergeschoben werden, daß die Abmessungen des entstehenden Außengehäuses 14 den zuvor ermittelten Werten entsprechen. Der Schließprozeß erfolgt dabei anhand geeigneter, zuvor in der Steuerung 20 ermittelter und auf das individuelle Substrat 10 bzw. Außengehäuse 14 abgestimmter Parameter (Druck, Weg), Anschließend werden die sich überlappenden Ränder miteinander verschweißt bzw. gefalzt oder gelötet. Das fertige Produkt ist in Figur 3 dargestellt.

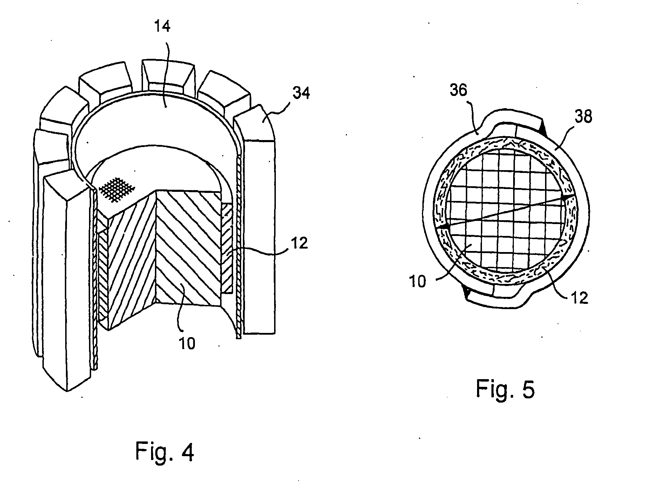

Neben dem Wickeln des Außengehäuses 14 kann die Montage auch durch ein sogenanntes Kalibrieren erfolgen. Eine entsprechende Kalibriervorrichtung ist in Figur 4 gezeigt. Diese umfaßt zahlreiche kreissegmentförmige, radial bewegliche Backen 34, die sich zu einem Ring schließen können. In das Innere des durch die Backen 34 umschriebenen Arbeitsraums wird das kreiszylindrische, rohrförmige Außengehäuse 14 gelegt, in welches der Einleger axial eingeschoben ist. Die Backen 34 werden anschließend radial nach innen verfahren, wobei die zuvor in der Steuerung 20 ermittelten Werte bezüglich der Geometrie des Außengehäuses 14 herangezogen werden. Das bedeutet, die durch die Steuerung 20 zuvor ermittelten gewünschten Abmessungen des Außengehäuses 14 werden durch eine weggesteuerte Bewegung der Backen 34 unter gleichzeitiger plastischer Verformung des zuvor bereits umfangsmäßig geschlossenen, mit entsprechend größerem Durchmesser vorgeformten Außengehäuses 14 erreicht. Soweit allerdings eine weggesteuerte Bewegung der Backen verwendet wird, fällt diese Ausführungsform nicht unter die Patentansprüche.

Anstatt der in Figur 4 gezeigten Backen 34 kann auch ein Kalibrieren mittels Rollen erfolgen, die gegen das Außengehäuse mit darin vorgesehenem Einleger seitlich um den vorbestimmten Verfahrweg gedrückt und gedreht werden. Auch ein sogenanntes Drücken ist in diesem Zusammenhang möglich, bei dem das Außengehäuse 14 mit dem darin angeordneten Einleger relativ um den vorbestimmten Verfahrweg gegen eine einzelne Rolle bewegt wird und anschließend eine Relativdrehung zwischen der Rolle und dem Außengehäuse samt Einleger erfolgt, so daß sich die Rolle umfangsmäßig in das Außengehäuse 14 drückt und dieses plastisch nach innen verformt.

Die in Figur 5 gezeigte Ausführungsform arbeitet mit zwei oder mehreren Schalen 36, 38, die ineinandergeschoben werden. Auch hier werden die Schalen 36, 38 weggesteuert bzw. druck- oder kraftgesteuert so weit ineinandergeschoben, bis die Innenabmessungen den ermittelten Abmessungen entsprechen. Die Schalen 36, 38 werden dann z.B. aneinandergeschweißt, gefalzt oder gelötet. Natürlich können die Schalen 36, 38 auch bereits vorab auf die gewünschten Endabmessungen geformt werden.

Zu betonen ist, daß das dargestellte Verfahren nicht etwa für Versuchszwecke gedacht ist, bei denen ein einzelner Katalysator oder Dieselpartikelfilter hergestellt wird. Vielmehr ist das Verfahren gerade für die Massenfertigung gedacht, bei der jedes einzelne Substrat samt Lagermatte sein maßgeschneidertes Außengehäuse erhält. Das beschriebene Verfahren führt zu einer besseren Qualität der hergestellten Vorrichtung bei geringem Kapitaleinsatz für die notwendigen Betriebsmittel.

## Patentansprüche

1. Verfahren zum Herstellen von abgasführenden Vorrichtungen, insbesondere Abgasreinigungsvorrichtungen, die jeweils ein Außengehäuse (14) mit einem darin geklemmten Einleger haben, wobei der Einleger ein abgasdurchströmtes Substrat (10) und ein das Substrat (10) umgebendes elastisches Ausgleichselement (12) umfaßt, **gekennzeichnet durch** folgende Schritte:
a) Bestimmen der individuellen Außengeometrie des Substrats (10),
b) Ermitteln einer auf die individuelle Außengeometrie des Substrats (10) abgestimmten Geometrie des Außengehäuses (14) zur Erzielung einer erforderlichen, individuell auf den Einleger abgestimmten und auszuübenden Klemmkraft,
c) Herstellen des Außengehäuses (14) mit abgestimmter Geometrie, und
d) Montieren und Klemmen des Einlegers im Außengehäuse (14), wobei das Schließen des Außengehäuses (14) druckgesteuert bzw. kraftgesteuert erfolgt.

2. Verfahren nach Anspruch 1, **dadurch gekennzeichnet, daß** zusätzlich zum Bestimmen der Außengeometrie des Substrats (10) das individuelle Gewicht des Ausgleichselements (12) bestimmt wird.

3. Verfahren nach Anspruch 1 oder 2, **dadurch gekennzeichnet, daß** die abgestimmte Geometrie des Außengehäuses (14) durch inkrementales Umformen erzeugt wird.

4. Verfahren nach einem der vorhergehenden Ansprüche, **dadurch gekennzeichnet, daß** das Außengehäuse (14) geschlossen wird, um den Einleger zu klemmen.

5. Verfahren nach Anspruch 4, **dadurch gekennzeichnet, daß** vor dem Schließen des Gehäuses (14) geeignete Parameter für den Schließprozeß ermittelt werden.

6. Verfahren nach Anspruch 4 oder 5, **dadurch gekennzeichnet, daß** das Schließen des Gehäuses (14) druckgesteuert bzw. kraftgesteuert erfolgt.

7. Verfahren nach einem der vorhergehenden Ansprüche, **dadurch gekennzeichnet, daß** das Substrat (10) im wesentlichen zylindrisch mit einer von der Kreisform abweichenden Grundfläche ist.

8. Verfahren nach einem der vorhergehenden Ansprüche, **dadurch gekennzeichnet, daß** das Substrat (10) zur Bestimmung der individuellen Außengeometrie vermessen wird.

9. Verfahren nach einem der vorhergehenden Ansprüche, **dadurch gekennzeichnet, daß** zum Einleger ermittelte Daten in eine Steuerung (20) eingespeist werden und daß in der Steuerung (20) die individuelle Geometrie des zugeordneten Außengehäuses (14) ermittelt wird.

10. Verfahren nach einem der vorhergehenden Ansprüche, **dadurch gekennzeichnet, daß** es sich bei der Vorrichtung um einen Abgaskatalysator oder einen Dieselpartikelfilter oder eine Kombination aus beiden handelt.

11. Verfahren nach einem der vorhergehenden Ansprüche, **dadurch gekennzeichnet, daß** als Außengehäuse (14) ein Blechgehäuse verwendet wird.

12. Verfahren nach einem der vorhergehenden Ansprüche, **dadurch gekennzeichnet, daß** das Außengehäuse (14) durch Wickeln um den Einleger erzeugt wird.

13. Verfahren nach einem der Ansprüche 1 bis 11, **dadurch gekennzeichnet, daß** das Außengehäuse (14) durch Kalibrieren gegen den Einleger gepreßt wird.

14. Verfahren nach einem der Ansprüche 1 bis 11, **dadurch gekennzeichnet, daß** das Außengehäuse (14) aus mehreren Schalen (36, 38) besteht, die gegen den Einleger gepreßt und aneinander befestigt werden.

## Claims

1. A method of producing exhaust gas carrying devices, in particular exhaust gas purification devices, which each have an outer housing (14) with an insert piece clamped therein, the insert piece comprising a substrate (10) through which exhaust gas flows and an elastic compensating element (12) which surrounds the substrate (10), **characterized by** the following steps:
a) determining the individual outer geometry of the substrate (10),
b) ascertaining a geometry of the outer housing (14) which is adapted to the individual outer geometry of the substrate (10), for achieving a required clamping force individually adapted to and to be exerted on the insert piece,
c) producing the outer housing (14) with the adapted geometry, and
d) mounting and clamping the insert piece in the outer housing (14), the closure of the outer housing (14) being effected in a pressure-controlled or force-controlled manner.

2. The method according to claim 1, **characterized in that** in addition to determining the outer geometry of the substrate (10), the individual weight of the compensating element (12) is determined.

3. The method according to claim 1 or 2, **characterized in that** the adapted geometry of the outer housing (14) is produced by incremental reshaping.

4. The method according to any of the preceding claims, **characterized in that** the outer housing (14) is closed in order to clamp the insert piece.

5. The method according to claim 4, **characterized in that** suitable parameters for the closure process are ascertained prior to closure of the housing (14).

6. The method according to claim 4 or 5, **characterized in that** the closure of the housing (14) is effected in a pressure-controlled or force-controlled manner.

7. The method according to any of the preceding claims, **characterized in that** the substrate (10) is substantially cylindrical and has a base area which departs from a circular shape.

8. The method according to any of the preceding claims, **characterized in that** the substrate (10) is measured for determining the individual outer geometry.

9. The method according to any of the preceding claims, **characterized in that** data ascertained relating to the insert piece is fed into a control unit (20), and the individual geometry of the associated outer housing (14) is established in the control unit (20).

10. The method according to any of the preceding claims, **characterized in that** the device is an exhaust gas catalytic converter or a diesel particulate filter or a combination thereof.

11. The method according to any of the preceding claims, **characterized in that** a sheet metal housing is used for the outer housing (14).

12. The method according to any of the preceding claims, **characterized in that** the outer housing (14) is produced by wrapping it around the insert piece.

13. The method according to any of claims 1 to 11, **characterized in that** the outer housing (14) is pressed against the insert piece by a calibration process.

14. The method according to any of claims 1 to 11, **characterized in that** the outer housing (14) consists of several shells (36, 38) which are pressed against the insert piece and fastened to each other.

## Revendications

1. Procédé de fabrication de dispositifs conducteurs de gaz d'échappement, en particulier de dispositifs d'épuration des gaz d'échappement, comportant chacun un boîtier extérieur (14) présentant une pièce d'insert serrée dans celui-ci, la pièce d'insert comprenant un substrat (10) traversé par des gaz d'échappement ainsi qu'un élément de compensation élastique (12) entourant le substrat (10), **caractérisé par** les étapes suivantes :
a) définir la géométrie extérieure individuelle du substrat (10),
b) déterminer une géométrie du boîtier extérieur (14) adaptée à la géométrie extérieure individuelle du substrat (10) afin d'obtenir un effort de serrage nécessaire qui est individuellement adapté à la pièce d'insert et est à exercer sur celle-ci,
c) fabriquer le boîtier extérieur (14) avec la géométrie adaptée, et
d) monter et serrer la pièce d'insert dans le boîtier extérieur (14), la fermeture du boîtier extérieur (14) étant commandée par pression ou par force.

2. Procédé selon la revendication 1, **caractérisé en ce qu'**en plus de la détermination de la géométrie extérieure du substrat (10), le poids individuel de l'élément de compensation (12) est déterminé.

3. Procédé selon la revendication 1 ou 2, **caractérisé en ce que** la géométrie adaptée du boîtier extérieur (14) est réalisée par une mise en forme incrémentielle.

4. Procédé selon l'une des revendications précédentes, **caractérisé en ce que** le boîtier extérieur (14) est fermé pour serrer la pièce d'insert.

5. Procédé selon la revendication 4, **caractérisé en ce que** des paramètres appropriés pour le processus de fermeture sont déterminés avant la fermeture du boîtier (14).

6. Procédé selon la revendication 4 ou 5, **caractérisé en ce que** la fermeture du boîtier (14) est commandée par pression ou par force.

7. Procédé selon l'une des revendications précédentes, **caractérisé en ce que** le substrat (10) est sensiblement cylindrique et présente une surface de base qui diffère de la forme circulaire.

8. Procédé selon l'une des revendications précédentes, **caractérisé en ce que** le substrat (10) est mesuré pour déterminer la géométrie extérieure individuelle.

9. Procédé selon l'une des revendications précédentes, **caractérisé en ce que** des données déterminées pour la pièce d'insert sont entrées dans une unité de commande (20) et **en ce que** la géométrie individuelle du boîtier extérieur associé (14) est déterminée dans l'unité de commande (20).

10. Procédé selon l'une des revendications précédentes, **caractérisé en ce que** le dispositif est un pot catalytique ou un filtre à particules diesel ou une combinaison des deux.

11. Procédé selon l'une des revendications précédentes, **caractérisé en ce qu'**un boîtier en tôle est utilisé en tant que boîtier extérieur (14).

12. Procédé selon l'une des revendications précédentes, **caractérisé en ce que** le boîtier extérieur (14) est réalisé par enroulement autour de la pièce d'insert.

13. Procédé selon l'une des revendications 1 à 11, **caractérisé en ce que** le boîtier extérieur (14) est pressé contre la pièce d'insert par calibrage.

14. Procédé selon l'une des revendications 1 à 11, **caractérisé en ce que** le boîtier extérieur (14) est composé de plusieurs coques (36, 38) qui sont pressées contre la pièce d'insert et sont fixées les unes aux autres.
